(19) Europäisches Patentamt
European Patent Office
Office européen des brevets

(11) Veröffentlichungsnummer: **0 362 486 B1**

# (12) EUROPÄISCHE PATENTSCHRIFT

(45) Veröffentlichungstag der Patentschrift: **05.05.93**

(51) Int. Cl.[5]: **B22C 1/00**, C08G 18/54, C08G 18/18

(21) Anmeldenummer: **89112235.0**

(22) Anmeldetag: **05.07.89**

## (54) Formstoffe.

(30) Priorität: **05.10.88 DE 3833855**

(43) Veröffentlichungstag der Anmeldung:
**11.04.90 Patentblatt 90/15**

(45) Bekanntmachung des Hinweises auf die Patenterteilung:
**05.05.93 Patentblatt 93/18**

(84) Benannte Vertragsstaaten:
**AT BE CH DE ES FR GB IT LI NL SE**

(56) Entgegenhaltungen:
**GB-A- 2 050 400**
**US-A- 3 590 902**
**US-A- 3 726 867**
**US-A- 4 436 881**

(73) Patentinhaber: **RÜTGERSWERKE AKTIENGESELLSCHAFT**
**Mainzer Landstrasse 217**
**W-6000 Frankfurt am Main 1(DE)**

(72) Erfinder: **Gardziella, Arno, Dr.**
**Rüdinghauser Berg 4**
**W-5810 Witten-Rüdinghausen(DE)**
Erfinder: **Kwasniok, Alois, Dipl.-Ing.**
**Vor dem Hopey 8**
**W-5860 Iserlohn(DE)**
Erfinder: **Adolphs, Peter, Dr.**
**Tellenkamp 2**
**W-5750 Menden-Halingen(DE)**
Erfinder: **Wetzig, Ralf**
**Sonderhorstweg 11**
**W-5860 Iserlohn 7(DE)**

**EP 0 362 486 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Mischungen, die zur Herstellung von Formteilen, wie z. B. von Kernen und Formen in der Gießereiindustrie Verwendung finden.

Zur Herstellung derartiger Formteile wird ein körniges Material mit einem Bindemittel vermischt, das aus einem härtbaren Harz oder Harzgemisch und einem latenten Härter besteht. Die erhaltenen Massen werden nach der Formgebung gehärtet. Gemäß US-A 3,726,867 wird ein Phenolharz-Isocyanat-Gemisch, das geringe Mengen eines Schwermetallsalzes enthält, als Bindemittel verwendet. Die damit hergestellten Formteile härten an der Luft, wobei die Härtungszeit mehrere Stunden beträgt. Wesentlich kürzer sind die Härtungszeiten bei Anwendung kalter Begasungsverfahren (Gashärtungs-Verfahren).

Dabei wird eine Komponente als Gas oder Aerosol in die Härtungsreaktion mit eingebracht. Die Funktion dieser Komponente kann von Verfahren zu Verfahren spezifisch und unterschiedlich sein.

Das älteste und gut eingeführte Verfahren dieser Art - mit organischen Bindemitteln - ist das aus DE-PS 15 83 521 oder US-A 3,590,902 bekannte Polyurethan-Gashärtungsverfahren, das als "Cold-Box-Verfahren" in der deutschen Gießereiindustrie bekannt ist.

Beim Cold-Box-Verfahren besteht die Formstoff-Vermischung im allgemeinen aus Quarzsand, dem ein hydroxylgruppenhaltiges Phenolharz, gelöst in organischen Lösungsmitteln, und ein Diisocyanat, ebenfalls in Lösungsmitteln gelöst, zugemischt wird. Der Gesamtanteil an gelöstem Harz und Diisocyanat liegt im allgemeinen zwischen 1,2 und 2,0 % bezogen auf 100 Gew.-Teile Quarzsand. Beim Leichtmetallguß liegt man aus technischen Gründen an der unteren Grenze, beim Eisenguß an der oberen.

Das Vorgemisch wird in Formmodelle, bzw. Formkästen gebracht und dort mit geeigneten tertiären Aminen in Gas- oder Aerosolform begast. Durch die katalytische Wirkung des Amins findet eine spontane Härtung des Bindemittels statt.

Gemäß DE-PS 15 83 521 werden bei diesem Verfahren Phenolharze der allgemeinen Formel

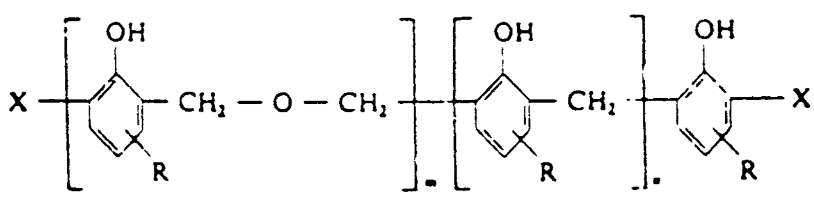

bevorzugt, in der R ein Wasserstoffatom oder einen zur Hydroxylgruppe metaständigen, phenolischen Substituenten und X ein Wasserstoffatom oder eine Methylolgruppe darstellt, die Summe aus m und n mindestens 2 und das Verhältnis m zu n mindestens 1 und das Molverhältnis von Methylolgruppen zu Wasserstoffatomen (als Endgruppe) mindestens 1 ist.

Es wurde versucht, Nachteile dieses Verfahrens, insbesondere das schlechte "bench life" der Bindemittel-Sand-Gemische zu verbessern. So werden gemäß GB-A-20 50 400 dem Bindemittelgemisch 10 bis 15 % trocknende Öle zugesetzt. US-A 4,436,881 empfiehlt aus gleichem Grund die Zugabe von organischen Phosphorverbindungen zum Bindemittel.

Dennoch bestehen immer noch technische Nachteile des Cold-Box-Verfahrens, wie die begrenzte Lagerfähigkeit des Formstoffes, da die Polyurethan-Polyadditions-Reaktion auch ohne Aminzusatz im Kernsand schon in gewisser Weise anspringt. Daraus resultiert eine Reduzierung der Festigkeiten, wenn der Sand einige Zeit nach der Sandaufbereitung verarbeitet wird (schlechtes "bench-life") oder die Raumtemperaturen besonders hoch sind. Ein weiterer Nachteil ist der Gehalt an freiem Phenol der verwendeten Harze, der im allgemeinen zwischen 5 und 10 % liegt. Ein besonders großer Nachteil ist der schlechte Zerfall der Formstoffe bei niedrigen Gießtemperaturen wie es beim Leichtmetallguß der Fall ist.

Aufgabe der Erfindung war es, Formstoffe zu entwickeln, bei denen die genannten Nachteile weitgehend ausgeschaltet sind.

Die Lösung der Aufgabe erfolgt durch Formstoffe gemäß der Ansprüche 1 bis 4, Verfahren zu ihrer Härtung gemäß der Ansprüche 5 und 6 und ihre Verwendung gemäß der Ansprüche 7 und 8.

Es wurde gefunden, daß sich die Nachteile des Verfahrens gemäß DE-PS 15 83 521 beheben lassen, wenn in derartigen Systemen als Phenolharz ein Phenolnovolak eingesetzt wird, der durch Kondensation eines Phenols und Formaldehyd in wäßriger, saurer Lösung bei einem molaren Verhältnis von Phenol zu Formaldehyd 1 : 0,25 bis 1: 0,5 hergestellt wurde und der die allgemeine Formel

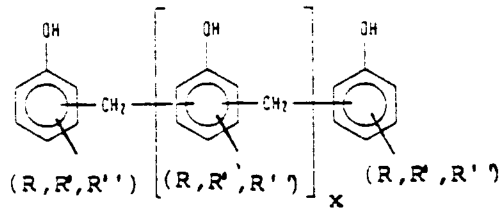

aufweist, wobei R, R' und R" gleich oder verschieden sind und Wasserstoff, eine oder mehrere Alkyl- oder Cycloalkylgruppen mit 1 bis 12 C-Atomen, eine Hydroxylgruppe oder einen anellierten Ring bedeuten und x = 0 oder eine ganze Zahl ist. Die numerische, prozentuale Molverteilung - bezogen auf die Variation von X - liegt in folgendem Bereich:

| | |
|---|---|
| x = 0: | 20 bis 55 %, vorzugsweise 25 bis 35 % |
| x = 1: | 15 bis 30 %, vorzugsweise 17 bis 23 % |
| x = 2: | 10 bis 30 %, vorzugsweise 13 bis 20 % |
| x = 3: | 0 bis 50 %, vorzugsweise 30 bis 40 % |
| $x > 4$: | 0 bis 2,5 %, vorzugsweise 0 bis 0,5 % |
| Freies unumgesetztes Phenol: | 0 bis 0,1 % |

Das mittlere Molekulargewicht dieser Novolake beträgt. 280 bis 480, vorzugsweise 350 bis 420 D.

Unter Verwendung dieser Bindemittel hergestellte Formstoffe für das Cold-Box-Verfahren sind lagerstabil und weitgehend phenolfrei. Die Festigkeit daraus hergestellter Formteile ist gegenüber bisherigen Formstoffen für Cold-Box-Verfahren auch nach langer Lagerzeit bei erhöhten Temperaturen wesentlich besser. Nach dem Gußvorgang, insbesondere nach einem Leichtmetallguß (600-750 °C) erfolgt ein leichter Zerfall der Formkörper.

Gemäß der DE-PS 15 83 521 kann zwar in dem Cold-Box-Verfahren "jedes beliebige, im wesentlichen wasserfreie und in einem organischen Lösungsmittel lösliche Phenolharz verwendet werden".

Die erfindungsgemäß in derartige Formstoffe einzusetzenden Novolake können allerdings nicht als mit dabei eingeschlossen angesehen werden, denn diese Harze waren zum Zeitpunkt der Anmeldung der DE-PS 15 83 521 nicht bekannt.

Erst die DE-OS 37 05 540 beschreibt Novolake, die mit einem Phenol-Formaldehyd-Verhältnis von 1 : 0,2 bis 1 : 0,4 hergestellt werden. Diese Phenolnovolake werden als intermediäre Bindemittel und Kohlenstoffbildner zur Herstellung von hochtemperaturbeständigen Formstoffen eingesetzt. Dabei kann sowohl mit und ohne Zusatz von Hexamethylentetramin als Härtungsmittel für Phenolnovolake gearbeitet werden.

Sie zeichnen sich (mit oder ohne Hexamethylentetramin verarbeitet) bei der Verkokung als gute Kohlenstoffbildner aus, welche feuerfesten Produkten eine hohe Festigkeit verleihen.

Es war daher für den Fachmann nicht zu erwarten, daß diese Novolake in einem ähnlichen Temperprozeß (Gießvorgang) besonders instabil sind und zu leicht zerfallenden Formteilen führen.

Daher ist es überraschend, daß die erfindungsgemäßen Formstoffe für das Cold-Box-Verfahren, insbesondere im Leichtmetallguß (600-750 °C), geeignet sind, d. h. nach dem Abgießen besonders gut zerfallen und ein ausgezeichnetes Ausrüttelverhalten aufweisen.

Der in der vorliegenden Erfindung zugrunde liegende Phenolnovolak wird in an sich bekannter Weise aus einem Phenol und Formaldehyd im molekularen Verhältnis von 1 : 0,25 bis 1 : 0,5 in wäßriger, saurer Lösung kondensiert. Als Phenole können ein- oder mehrkernige Phenole oder Gemische der genannten Verbindungsklassen eingesetzt werden und zwar sowohl ein- als auch mehrkernige Phenole.

Beispiele hierfür sind das Phenol selbst sowie dessen alkylsubstituierte Homologe wie ortho-, meta- oder para-Kresol oder höher alkylierte Phenole wie z. B. 3,5-Xylenol, 3,4-Xylenol, 2,3,5-Trimethylphenol, 3-Ethylphenol, 3,5-Diethylphenol, p-Butylphenol, 3,5-Dibutylphenol, p-Amylphenol, p-Cyclohexylphenol p-Octylphenol, oder Nonylphenol außerdem mehrwertige Phenole wie Resorcin oder Brenzkatechin und mehrkernige Phenole, vorzugsweise Naphtole, d. h. Verbindung mit anellierten Ringen.

Diese Phenole werden mit Formaldehyd oder einer Substanz, die unter den Reaktionsbedingungen Formaldehyd abzuspalten vermag, in saurer, wäßriger Lösung umgesetzt. Produkte diese Art sind z. B. Formaldehyd selbst bzw. dessen handelsübliche 30-50 %ige Lösung (Formalin) oder Substanzen, die Formaldehyd in chemisch lockerer Form gebunden enthalten wie Formaldehyd-Bisulfit, Urotropin, Trioxymethylen oder Paraformaldehyd.

Die dabei erhaltenen Novolak-Harze sind bei Raumtemperatur fest, beginnen oberhalb 30 °C zu schmelzen und sind in einer Vielzahl von aromatischen oder aliphatischen Lösungsmitteln gut löslich.

Bevorzugt werden als Lösungsmittel solche aus der Gruppe der Ester aliphatischer und aromatischer Mono- und Polycarbonsäuren, Ketone sowie Gemische der genannten Lösungsmittel mit aromatischen Lösungsmitteln verwendet.

Die zweite Komponente des erfindungsgemäß eingesetzten Bindemittels, das Polyisocyanat, enthält vorzugsweise zwei bis fünf Isocyanatgruppen. Es können auch Mischungen von Polyisocyanaten verwendet werden. Auch durch Umsetzung von überschüssigem Polyisocyanat mit einem mehrwertigen Alkohol erhaltene Präpolymere beispielsweise solche aus Toluylendiisocyanat und Ethylenglykol lassen sich verwenden. Zu den geeigneten Polyisocyanaten gehören aliphatische Polyisocyanate, wie Hexamethylendiisocyanat, alicyclische Polyisocyanate, wie 4,4'-dicyclohexylmethandiisocyanat, aromatische Polyisocyanate, wie 2,4- oder 2,6-toluylendiisocyanat, Diphenylmethyldiisocyanat oder deren Dimethylderivate. Weitere Beispiele für geeignete Polyisocyanate sind 1,5-Naphthalindiisocyanat, Triphenylmethantriisocyanat, Xylylendiisocyanat oder deren Methylderivate, Polymethylenpolyphenolisocyanat oder Chlorphenylen-2,4-diisocyanat. Obgleich alle Polyisocyanate mit dem Novolak reagieren, werden aromatische Polyisocyanate, insbesondere Diphenylmethandiisocyanat, Triphenylmethantriisocyanat oder deren Mischungen bevorzugt, die in üblichen Lösungsmitteln, vornehmlich aromatischen Lösungsmittelgemischen, Verwendung finden.

Als körniges Material zur Herstellung der erfindungsgemäßen Formstoffe dienen alle körnigen, hochtemperaturbeständigen Produkte, insbesondere Quarz-, Chromit-, Olivin-, Zirkonsand oder Schamotte, die einzeln oder im Gemisch miteinander eingesetzt werden können.

Zur Herstellung der erfindungsgemäßen Formstoffe wird in an sich bekannter Weise trockenes, körniges Material mit 0,25 bis 10 Gew.-%, insbesondere mit 0,5 bis 2,5 Gew.-% Bindemittel gemischt.

Das Bindemittel selbst wird kurz vor Gebrauch durch Vermischen der Isocyanatkomponente mit der 40 bis 70 %igen Novolaklösung hergestellt, wobei die Mengen so ausgelegt sind, daß bei der Aushärtung zumindest alle Isocyanatgruppen mit Hydroxylgruppen des Novolaks reagieren können. Dies ist erreicht, wenn das Polyisocyanat in einer Menge von 10 bis 500, vorzugsweise 20 bis 300 Gewichtsprozent, bezogen auf Phenolharz, eingesetzt wird.

Die Härtung der erfindungsgemäßen Formstoffe erfolgt nach ihrer Formgebung durch Zugabe katalytischer Mengen aminischer Verbindungen. Diese erfolgt bevorzugt durch Begasung der ungehärteten Formteile mit Aminen bei Raumtemperatur, wobei die Formteile innerhalb von 60 s härten.

Als Begasungsmittel zur spontanen katalytischen Auslösung der Härtung werden vorzugsweise Luft- oder Stickstoff-Gemische von tertiären Aminen in Gas- oder Aerosol-Form verwendet. Die vornehmlich verwendeten tertiären Amine sind Triethyl-, Dimethylethyl- oder Dimethylisopropylamin.

Beim Gebrauch entsprechend hergestellter Formen und Kerne für den Leichtmetallguß zeigen sich folgende Vorteile der erfindungsgemäßen Formstoffe:

Die Formstoffe sind länger als 10 Stunden verarbeitbar. Die Formen und Kerne erfüllen die gießereitechnischen Anforderungen (Festigkeiten, thermisches Verhalten etc.). Beim Abguß mit Aluminium (bei ca. 700 °C) werden die maximalen Arbeitsplatzkonzentrationen für Phenol weit unterschritten. Obwohl auf den bislang üblichen Zusatz zerfallfordernder Additive verzichtet wird erfolgt nach dem Abguß ein leichter Zerfall der Formen und Kerne. Die Gußteile sind problemlos (ohne zusätzlichen Tempervorgang) durch Rütteln von Formstoffresten zu entleeren.

## Beispiele

Beispiele und Vergleichsbeispiele 1 bis 3

Beispiel 1:

Herstellung eines erfindungsgemäßen Phenolnovolaks

94 kg Phenol werden mit 940 g Oxalsäure versetzt und auf ca. 100 °C erhitzt. Unter Rühren und Rückfluß werden über 3 h verteilt 16,7 kg Formalin (45 %ig) zugegeben. Nach Beendigung der Zugabe wird die Reaktionsmischung bis zu einem Gehalt an freiem Formalin von < 0,3 % unter Rückfluß erhitzt und danach durch Destillation von leichtsiedenden Bestandteilen (Wasser, Phenol) bis zu einem Gehalt an freiem Phenol von < 0,5 % befreit. Die Harzschmelze wird in Butylglycolacetat in einem Gew.-Mengen-Verhältnis von 1 : 1 gelöst und auf Raumtemperatur abgekühlt.

Die Molekulargewichtsverteilung des Basisnovolaks ist in Tabelle 1 aufgeführt, ebenso die Viskosität der Harzlösungen.

Beispiel 2:

wie in Beispiel 1 mit einem Verhältnis Phenol : Formaldehyd von 1 : 0,35 (94 kg Phenol; 23,3 kg Formalin (45 %ig)).

Beispiel 3:

wie in Beispiel 1 mit einem Verhältnis Phenol : Formaldehyd von 1 : 0,45 (94 kg Phenol; 30 kg Formalin (45 %ig)).

Vergleichsbeispiel 1:

50 kg eines herkömmlichen mittelmolekularen Novolaks wie z. B. Bakelite® - Harz K 790 L werden mit 50 kg Butylglycolacetat gelöst.

Vergleichsbeispiel 2:

50 kg eines herkömmlichen hochmolekularen Novolaks wie z. B. Bakelite® - Harz K 790 H werden mit 50 kg Butylglycolacetat gelöst.

Vergleichsbeispiel 3:

Herkömmliches, konventionelles Cold - Box - Bindemittel auf Phenoletherresol - Basis wie z. B. Bakelite® - Harz 8763 GK oder Isocure® 352.

Tabelle 1

Molekulargewichtsverteilung des Basisnovolaks

| | Beispiel 1. | Beispiel 2. | Beispiel 3. | Vergleichsbeispiel 1. | Vergleichsbeispiel 2. |
|---|---|---|---|---|---|
| Mittleres Molekulargewicht | 280 | 350 | 420 | 550 | 700 |
| Freies Phenol (%) | 0,1 | 0,1 | 0,1 | 0,1 | 0,1 |
| 2 Kerne x = 0 (%) | 50 | 35 | 28 | 13 | 7 |
| 3 Kerne x = 1 (%) | 28 | 22 | 18 | 11 | 6 |
| 4 Kerne x = 2 (%) | 20 | 14 | 12 | 9 | 6 |
| $>$ 4 Kerne x $>$ 2 (%) | 1,9 | 28,9 | 41,1 | 66,9 | 80,9 |
| Viskosität der Harzlösung bei 20 °C [mPa·s] | ca. 180 | ca. 240 | ca. 300 | ca. 550 | ca. 1.800 |

Beispiele und Vergleichsbeispiele 4 bis 6

Mit den in Beispiel 1 bis 3 und Vergleichsbeispiel 1 und 2 beschriebenen Harzlösungen sowie mit Vergleichsbespiel 3 wegen gemäß folgender Rezeptur Formstoffmischungen hergestellt:

Zu 4.000 g Quarzsand (Typ H 33, Quarzwerke Haltern) werden 24 g eines handelsüblichen Aktivators (ein mit aromatischen Lösemitteln verdünntes Diphenylmethan – 4,4' – Diisocyanat) wie z. B. Bakelite® – Aktivator 8600 H oder Isocure® 652 gegeben und in einem Flügelmischer 1,5 min gemischt. Dazu gibt man 24 g einer der zuvor in Beispiel 1 bis 3 und Vergleichsbeispiel 1 und 2 beschriebenen Harzlösung oder das in Vergleichsbeispiel 3 beschriebene herkömmliche Bindemittel und mischt weitere 1,5 min.

Beispiel 4:

Als Phenolharzlösung wird eine Harzlösung aus Beispiel 1 eingesetzt.

Beispiel 5:

Als Phenolharzlösung wird eine Harzlösung aus Beispiel 2 eingesetzt.

Beispiel 6:

Als Phenolharzlösung wird eine Harzlösung aus Beispiel 3 eingesetzt.

Vergleichsbeispiel 4:

Als Phenolharzlösung wird eine Harzlösung aus Vergleichsbeispiel 1 eingesetzt.

Vergleichsbeispiel 5:

Als Phenolharzlösung wird eine Harzlösung aus Vergleichsbeispiel 2 eingesetzt.

Vergleichsbeispiel 6:

Als Bindemittel kommt ein Bindemittel aus Vergleichsbeispiel 3 zum Einsatz.

Mit den Formstoffmischungen gemäß der Beispiele 4 bis 6 und der Vergleichsbeispiele 4 bis 6 werden folgende Prüfungen durchgeführt:

**1. Kaltbiegefestigkeit**

Die Formstoffmischungen werden in einer Labor – Kernschießmaschine mit 4 bar Schießdruck in entsprechenden Formen verdichtet. Der verdichtete Formstoff wird mit gasförmigem Dimethylethylamin (1 g Amin/1 kg Sandmischung) begast und anschließend 15 s mit 70 °C warmer Luft gespült. Es resultieren Prüfkörper mit den Abmessungen 165 x 22,5 x 22,5 mm. An diesen Prüfkörpern wird die Biegefestigkeit 1 min, 1 h und 24 h nach dem Begasen bestimmt.

**2. Verarbeitbarkeitszeit ("bench life")**

Es wird die Biegefestigkeit gemäß 1 einer frischen, 3 und 8 Stunden alten Formstoffmischung gemessen.

**3. Zerfallseigenschaften**

Von der Hälfte eines 24 Stunden alten Prüfkörpers wird das Gewicht bestimmt. Anschließend wird die Probe 5 min bei 600 °C in einem Muffelofen getempert. Nach dem Abkühlen (frühestens 1 h nach Entnahme aus dem Ofen) wird die Probe auf ein Sieb (Boden und Deckel) mit 1.000 µm Maschenweite gelegt und auf einer Laborsiebmaschine bei festgelegter Frequenz 60 s gerüttelt. Ermittelt wird die Zerfallsmenge (die durchs Sieb gegangene Sandmenge) in Prozent.

**4. Zerfallsprüfung in der Praxis**

Von den Mischungen gemäß den Beispielen 4 bis 6 und Vergleichsbeispielen 4 bis 6 werden als Praxistest Kerne gefertigt und nach dem Abgießen des Entkernen ermittelt.

Es werden Saugrohrkerne (Leichtmetall guß) hergestellt und abgegossen. Nach dem Abkühlen wird auf einer betriebsüblichen Vibrationsanlage entkernt. Ermittelt werden dabei die Zeit bis zum völligen Entkernen und der Grad der Entkernung.

Die Ergebnisse sind in der folgenden Tabelle 2 zusammengefaßt. Aus der Tabelle geht deutlich der Vorteil der erfindungsgemäßen Kondensationsprodukte hervor.

Tabelle 2

| Beispiel | Kaltbiegefestigkeit in N/cm² (nach Prüfung 1) und Verarbeitbarkeitszeit (nach Prüfung 2)<br>1. Wert: frischer Formstoff<br>2. Wert: 3 h alter Formstoff<br>3. Wert: 8 h alter Formstoff | | | Zerfallsmenge (nach Prüfung 3) [%] | Zerfall in Praxis (nach Prüfung 4) |
|---|---|---|---|---|---|
| | nach 1 min | nach 1 h | nach 24 h | | |
| 4 | 300<br>320<br>330 | 325<br>340<br>340 | 335<br>350<br>330 | 88 | nach 15 s vollständig |
| 5 | 290<br>310<br>300 | 310<br>300<br>310 | 315<br>300<br>290 | 87 | nach 15 s vollständig |
| 6 | 290<br>280<br>280 | 270<br>280<br>280 | 300<br>280<br>280 | 81 | nach 20 s vollständig |
| Vergl. 4 | 230<br>220<br>190 | 260<br>260<br>240 | 280<br>280<br>260 | 59 | nach 25 s nicht vollständig entkernt (kleine Brocken) |
| Vergl. 5 | 190<br>180<br>150 | 255<br>220<br>210 | 270<br>260<br>230 | 55 | nach 25 s nicht vollständig entkernt (große Brocken) |
| Vergl. 6 | 300<br>325<br>nicht mehr verarbeitbar | 410<br>320 | 460<br>310 | 37 | nach 25 s nicht vollständig entkernt (große Brocken) |

## Patentansprüche

1. Formstoffe aus trockenem körnigem hochtemperaturbeständigem Material und 0,25 bis 10 Gew.-% eines Bindemittels aus einem Phenolnovolak und 10 bis 500 Gew.-%, bezogen auf den Novolak, eines

Polyisocyanats oder einer Mischung von Polyisocyanaten, wobei das Bindemittel unter Zusatz von aminischen Katalysatoren aushärtet, **dadurch gekennzeichnet,** daß der Phenolnovolak ein mittleres Molekulargewicht von 280 bis 480 D hat, durch Kondensation eines Phenols und Formaldehyd in wäßriger saurer Lösung bei einem molaren Verhältnis von Phenol: Formaldehyd von 1 : 0,25 bis 1 : 0,5 hergestellt wurde und die Formel

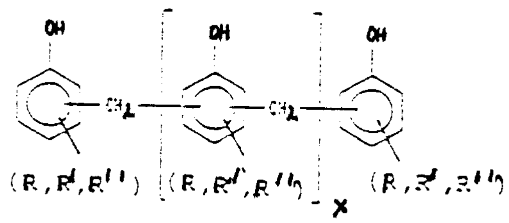

aufweist, wobei R, R' und R" gleich oder verschieden sind und Wasserstoff, eine oder mehrere Alkyl- oder Cycloalkylgruppen mit 1 bis 12 C-Atomen, eine Hydroxylgruppe oder einen anellierten Ring bedeuten und x = 0, oder eine ganze Zahl ist und die prozentuale Molekularverteilung, bezogen auf die Variation von x, sich wie folgt darstellt:

x = 0: 20 bis 55 %
x = 1: 15 bis 30 %
x = 2: 10 bis 30 %
x = 3: 0 bis 50 %
x ≧ 4: 0 bis 2,5 %

2. Formstoffe gemäß Anspruch 1, **dadurch gekennzeichnet,** daß x = 0 und eine ganze Zahl von 1 bis 4 ist.

3. Formstoffe nach Anspruch 1 und 2, **dadurch gekennzeichnet,** daß der Novolak ein mittleres Molekulargewicht von 350 bis 420 D hat.

4. Formstoffe gemäß den Ansprüchen 1 bis 3, **dadurch gekennzeichnet,** daß sie als körniges Material Quarz-, Chromit-, Olivin-, Zirkonsand, Schamotte oder deren Gemische enthält.

5. Verfahren zur Härtung der Formstoffe gemäß den Ansprüchen 1 bis 4, **dadurch gekennzeichnet,** daß den Formstoffen katalytisch wirkende Amine gasförmig oder als Aerosole zugeführt werden.

6. Verfahren nach Anspruch 5, **dadurch gekennzeichnet,** daß als Amine Triethyl-, Dimethylethyl- oder Dimethylisopropylamin eingesetzt werden.

7. Verwendung der Formstoffe gemäß den Ansprüchen 1 bis 4 zur Herstellung von Gießereikernen und -formen.

8. Verwendung der Formstoffe gemäß den Ansprüchen 1 bis 4 zur Herstellung von Gießereikernen und -formen für den Leichtmetallguß bei Gießtemperaturen unterhalb 750 °C.

## Claims

1. Moulding materials of dry granular high-temperature-resistant material and from 0•25 to 10% by weight of a binder of a phenol novolak and from 10 to 500% by weight, relative to the novolak, of a polyisocyanate or a mixture of polyisocyanates, the binder hardening with the addition of amine catalysts, characterized in that the phenol novolak has an average molecular weight of from 280 to 480 D, was prepared by condensation of a phenol and a formaldehyde in an aqueous acid solution with a molar ratio of phenol to formaldehyde of from 1 : 0•25 to 1 : 0•5 and has the formula

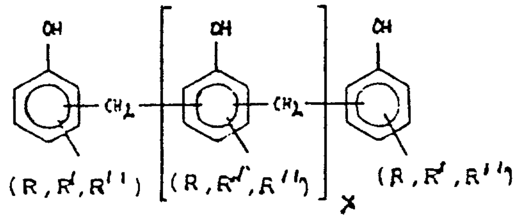

in which R, R' and R" are the same or different and represent hydrogen, one or more alkyl or cycloalkyl groups having 1 to 12 carbon atoms, an hydroxyl group or a fused ring, and x = 0 or is a whole number and the percentage molecular distribution, relative to the variation of x, is as follows:

x = 0: 20 to 55%
x = 1: 15 to 30%
x = 2: 10 to 30%
x = 3; 0 to 50%
x = 4: 0 to 2•5%.

**2.** Moulding materials according to Claim 1, characterized in that x = 0 and is a whole number from 1 to 4.

**3.** Moulding materials according to Claims 1 and 2, characterized in that the novolak has an average molecular weight of from 350 to 420 D.

**4.** Moulding materials according to Claims 1 to 3, characterized in that it contains quartz sand, chromite sand, olivine sand, zirconium sand, fire clay or mixtures thereof as granular material.

**5.** A process for hardening the moulding materials according to Claims 1 to 4, characterized in that catalytically acting amines are supplied in gaseous form or as aerosols to the moulding materials.

**6.** A process according to Claim 5, characterized in that triethyl, dimethylethyl or dimethylisopropylamine are used as amines.

**7.** Use of the moulding materials according to Claims 1 to 4 for the preparation of foundry cores and moulds.

**8.** Use of the moulding materials according to Claims 1 to 4 for the preparation of foundry cores and moulds for light – metal casting at casting temperatures below 750 ° C.

## Revendications

**1.** Matières de moulage à partir d'un matériau granulaire, sec, résistant aux hautes températures, de 0,25 à 10% en poids d'un liant constitué par une novoloaque phénolique et de 10 à 500% en poids, rapportés à la novolaque, d'un polyisocyanate ou d'un mélange de polyisocyanates, le liant durcissant par addition de catalyseurs aminés, caractérisées en ce que la novolaque phénolique possède un poids moléculaire moyen de 280 à 480 daltons, a été préparée par condensation d'un phénol et de formaldéhyde en solution aqueuse acide dans un rapport molaire de phénol : formaldéhyde de 1 : 0,25 à 1 : 0,5 et répond à la formule

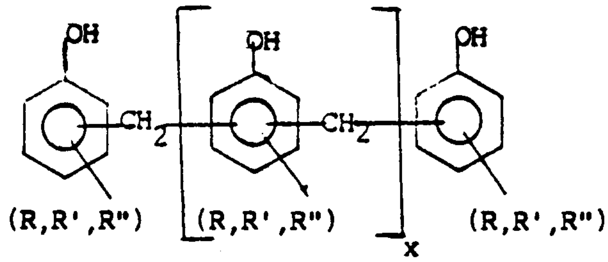

dans laquelle R, R' et R" sont identiques ou différents et signifient l'hydrogène, un ou plusieurs groupes alkyles ou cycloalkyles avec 1 à 12 atomes de C, un groupe hydroxyle ou un noyau condensé et x = 0 ou un nombre entier et dans laquelle la répartition moléculaire en pourcent, rapportée aux variations de x, s'établit comme suit:

$x = 0$ : 20 – 55%
$x = 1$ : 15 – 30%
$x = 2$ : 10 – 30%
$x = 3$ : 0 – 50%
$x \geqq 4$ : 0 – 2,5%

**2.** Matières de moulage selon la revendication 1, caractérisées en ce que x = 0 et est un nombre entier de 1 à 4.

**3.** Matières de moulage selon les revendications 1 et 2, caractérisées en ce que la novolaque possède un poids moléculaire moyen de 350 à 420 daltons.

**4.** Matières de moulage selon les revendications 1 à 3, caractérisées en ce qu'elles contiennent comme matériau granulaire du sable siliceux, du sable de chromite, d'olivine, de zircone, de la chamotte ou leurs mélanges.

**5.** Procédé pour le durcissement des matières de moulage selon les revendications 1 à 4, caractérisé en ce que des amines à effet catalytique sont amenées aux matières de moulage à l'état gazeux ou sous forme d'aérosols.

**6.** Procédé selon la revendication 5, caractérisé en ce que de la triéthyl–, diméthyléthyl– ou diméthylisopropylamine est mise en oeuvre en tant qu'amine.

**7.** Utilisation des matières de moulage selon les revendications 1 à 4 pour la confection de noyaux et de moules de fonderie.

**8.** Utilisation des matières de moulage selon les revendications 1 à 4 pour la confection de noyaux et de moules de fonderie destinés à la coulée de métaux légers à des températures de coulée inférieures à 750 ° C.